# EUROPÄISCHE PATENTANMELDUNG

(11) **EP 2 525 571 A1**
(43) Veröffentlichungstag der Anmeldung: **21.11.2012**
(21) Anmeldenummer: 12168315.5
(22) Anmeldetag: 16.05.2012
(51) Int. Cl.: H04N 5/64, H04N 5/44, H04N 21/422, A47B 81/06

(54) **Einrichtung zum Bewegen einer Anzeigeeinrichtung**

(30) Priorität: 17.05.2011 DE 202011102481 U
(71) Anmelder: Stabilus GmbH, 56070 Koblenz (DE)
(72) Erfinder: Huber, Ralph, 56743 Mendig (DE)
(74) Vertreter: Klein, Thomas

(57) **Zusammenfassung**

Die Erfindung bezieht sich auf eine Einrichtung zum Bewegen eines Anzeigegerätes 4, beispielsweise eines Fernsehgerätes, oder einer Anzeigeeinrichtung des Anzeigegerätes 4 zwischen einer Anzeigeposition und einer Ruheposition. Mit einer Fernbedienung 6 zum Bedienen des Anzeigegerätes 4. Mit einer Antriebseinheit 8 zum Bewegen des Anzeigegerätes 4 bzw. seiner Anzeigeeinrichtung zwischen der Anzeigeposition und der Ruheposition und mit einer Steuerungseinheit 10 zum Ansteuern der Antriebseinheit 8. Die Steuerungseinheit 10 weist Detektionsmittel zur Detektion des Betriebszustandes des Anzeigegerätes 4 auf und die Steuerungseinheit 16 steuert die Antriebseinheit 8 in Abhängigkeit von Ausgangssignalen der Detektionsmittel derart an, daß die Antriebseinheit 8 beim Einschalten des Anzeigegerätes 4 dasselbe bzw. dessen Anzeigeeinrichtung in die Anzeigeposition und beim Ausschalten des Anzeigegerätes 4 dasselbe bzw. dessen Anzeigeeinrichtung in die Ruheposition bewegt.

## Beschreibung

Die Erfindung betrifft eine Einrichtung der im Oberbegriff des Anspruchs 1 genannten Art zum Bewegen eines Anzeigegerätes, beispielsweise eines Fernsehgerätes, oder einer Anzeigeeinrichtung des Anzeigegerätes zwischen einer Anzeigeposition und einer Ruheposition.

Moderne Fernsehgeräte weisen, beispielsweise bei Verwendung eines TFT-Displays, eine sehr geringe Bautiefe auf, die es ermöglicht, das Fernsehgerät bei Nichtbenutzung beispielsweise in einem Teil eines Möbels aufzunehmen.

Es sind Einrichtungen der betreffenden Art bekannt, die eine Fernbedienung für das Anzeigegerät und eine Antriebseinheit zum Bewegen des Anzeigegerätes zwischen einer Anzeigeposition und einer Ruheposition aufweisen. Bei den bekannten Einrichtungen ist die Antriebseinheit beispielsweise als Hubsäule ausgebildet. Die bekannten Einrichtungen weisen ferner eine Steuerungseinheit zum Ansteuern der Antriebseinheit auf. Um den Komfort für einen Benutzer zu erhöhen, weist bei den bekannten Einrichtungen die Antriebseinheit eine Fernbedienung auf, mittels derer die Bewegung des Anzeigegerätes zwischen seiner Anzeigeposition und seiner Ruheposition ausgelöst wird. Um das Anzeigegerät zu benutzen, wird zunächst mittels der Fernbedienung die Antriebseinheit so angesteuert, daß sie das Anzeigegerät aus der Ruheposition in die Anzeigeposition bewegt, beispielsweise also das Anzeigegerät aus einem Möbel, in dem es in der Ruheposition aufgenommen ist, ausfährt. Daran anschließend kann das Anzeigegerät mittels seiner Fernbedienung eingeschaltet werden. Wenn das Anzeigegerät nicht mehr benötigt wird, so wird es zunächst mittels seiner Fernbedienung ausgeschaltet. Daran anschließend kann die Antriebseinheit mittels ihrer Fernbedienung so angesteuert werden, daß das Anzeigegerät aus der Anzeigeposition zurück in die Ruheposition bewegt wird.

Der Erfindung liegt die Aufgabe zugrunde, eine Einrichtung der im Oberbegriff des Anspruchs 1 genannten Art anzugeben, bei der der Komfort für den Benutzer weiter erhöht ist.

Diese Aufgabe wird durch die im Anspruch 1 angegebene Erfindung gelöst.

Der Grundgedanke der Erfindung besteht darin, die Bewegung des Anzeigegerätes aus der Ruheposition in die Anzeigeposition und zurück, also beispielsweise ein Ein- bzw. Ausfahren des Anzeigegerätes aus einem Möbel, einerseits und die Bedienung des Anzeigegerätes, beispielsweise eines Fernsehgerätes, mittels derselben Fernbedienung vorzunehmen. Damit erübrigt sich eine zweite Fernbedienung, so daß der Komfort für den Benutzer gesteigert ist. Erfindungsgemäß ist vorgesehen, daß die Steuerungseinheit Detektionsmittel aufweist, die den Betriebszustand des Anzeigegerätes detektieren. Die Detektionsmittel detektieren also erfindungsgemäß beispielsweise, ob sich das Anzeigegerät im vollständig ausgeschalteten Zustand, im Standby-Modus oder im vollständig eingschalteten Zustand befindet. In Abhängigkeit von Ausgangssignalen der Detektionsmittel steuert die Steuerungseinheit die Antriebseinheit derart an, daß die Antriebseinheit beim Einschalten des Anzeigegerätes das Anzeigegerät bzw. dessen Anzeigeeinrichtung in die Anzeigeposition und beim Ausschalten des Anzeigegerätes das Anzeigegerät bzw. dessen Anzeigeeinrichtung in die Ruheposition bewegt.

Beispielsweise können die Detektionsmittel detektieren, daß das Anzeigegerät aus dem Standby-Modus in den vollständig eingeschalteten zustand geschaltet wird, so daß die Steuerungseinheit demzufolge eine Bewegung des Antriebsgerätes aus der Ruheposition in die Anzeigeposition auslöst. Wird durch die Detektionsmittel beispielsweise detektiert, daß das Anzeigegerät aus dem vollständig eingeschalteten Zustand in den Standby-Modus geschaltet wird, so kann infolgedessen die Steuerungseinheit eine Bewegung des Anzeigegerätes aus der Anzeigeposition zurück in die Ruheposition auslösen und die Antriebseinheit entsprechend ansteuern.

Unter einem Einschalten wird erfindungsgemäß verstanden, daß das Anzeigegerät aus einem vollständig ausgeschalteten Zustand oder Standby-Modus in einen vollständig eingeschalteten Zustand bewegt wird. In hierzu entsprechender Weise wird unter einem Ausschalten erfindungsgemäß ein Schaltvorgang verstanden, bei dem das Anzeigegerät aus einem vollständig eingeschalteten Zustand in einen Standby-Modus oder einen völlig ausgeschalteten Zustand geschaltet wird.

Erfindungsgemäß kann eine Bewegung des Anzeigegerätes zwischen seiner Ruheposition und seiner Anzeigeposition dann ausgelöst werden, wenn der Benutzer einen an dem Anzeigegerät vorgesehenen Schalter betätigt. Befindet sich das Anzeigegerät beispielsweise im vollständig ausgeschalteten Zustand und wird über einen an dem Anzeigegerät vorgesehenen Schalter eingeschaltet, so können die Detektionsmittel diesen Schaltvorgang detektieren und entsprechend eine Bewegung des Anzeigegerätes in die Anzeigeposition auslösen. Anstelle einer solchen Auslösung oder zusätzlich zu dieser kann die Steuerungseinheit die Antriebseinheit auch in Abhängigkeit von einer Betätigung der Fernbedienung ansteuern.

Es ist erfindungsgemäß auch möglich, eine Auslösung in Abhängigkeit von einer Betätigung der Fernbedienung und eine Auslösung in Abhängigkeit von einer Betätigung eines am Anzeigegerät vorgesehenen Schalters miteinander zu kombinieren, so daß beispielsweise eine Bewegung des Anzeigegerätes in die Anzeigeposition dann ausgelöst wird, wenn das Anzeigegerät mittels eines daran angeordneten Schalters eingeschaltet oder mittels der Fernbedienung betätigt wird.

Die Detektionsmittel können auf beliebige geeignete Weise ausgebildet sein. Handelt es sich bei der Fernbedienung beispielsweise um eine Infrarot-Fernbedienung, so können die Detektionsmittel beispielsweise einen separaten Infrarotempfänger aufweisen. Wird mittels dieses separaten Infrarotempfängers festgestellt, daß der Benutzer das Anzeigegerät mit der Fernbedienung ansteuert, so können die Detektionsmittel ein entsprechendes Signal an die Steuerungseinheit übermitteln, die daraufhin die Antriebseinheit zum Bewegen des Anzeigegerätes in die Anzeigeposition ansteuert. Erfindungsgemäß sind auch andere Detektionsmechanismen möglich, die auf Schaltvorgänge reagieren, die entweder über die Fernbedienung oder über einen an dem Anzeigegerät vorgesehenen Schalter ausgelöst werden. Eine außerordentlich vorteilhafte Weiterbildung der Erfindung sieht vor, daß die Detektionsmittel wenigstens einen Stromsensor aufweisen, der derart mit der Spannungsversorgung des Anzeigegerätes in Detektionsverbindung steht, daß der Stromsensor beim Einschalten des Anzeigegerätes mitttels der Fernbedienung einen Anstieg der Stromaufnahme des Anzeigegerätes und beim Abschalten des Anzeigegerätes mittels der Fernbedienung einen Abfall der Stromaufnahme detektiert. Diese Ausführungsform ist besonders einfach im Aufbau, da geeignete Stromsensoren als relativ einfache und kostengünstige Standardbauteile zur Verfügung stehen und sich auf einfache Weise in eine Steuerungseinheit des Anzeigegerätes integrieren lassen. Ein weiterer Vorteil dieser Ausführungsform besteht darin, daß der Stromsensor auf einen Anstieg bzw. Abfall der Stromaufnahme des Anzeigegerätes reagiert, unabhängig davon, wie dieser Anstieg bzw. Abfall ausgelöst wird. So ist es beispielsweise möglich, daß das Anzeigegerät in die Anzeigeposition bewegt wird, wenn entweder die Fernbedienung oder ein an dem Anzeigegerät vorgesehener Schalter betätigt wird. Gleichermaßen kann das Anzeigegerät dann in die Ruheposition bewegt werden, wenn es entweder über einen am Anzeigegerät vorgesehenen Schalter oder über die Fernbedienung ausgeschaltet wird. Falls verhindert werden soll, daß das Anzeigegerät bereits beim Schalten aus dem vollständig ausgeschalteten Zustand in den Standby-Modus in die Anzeigeposition bewegt wird, so kann der entsprechende Vorgang erst dann ausgelöst werden, wenn die Stromaufnahme des Anzeigegerätes einen vorbestimmten Schwellenwert überschreitet. In hierzu entsprechender Weise kann die Bewegung des Anzeigegerätes zurück in die Ruheposition bereits dann ausgelöst werden, wenn die Stromaufnahme diesen Schwellenwert unterschreitet.

Bei dem Anzeigegerät kann es sich beispielsweise und insbesondere um ein Fernsehgerät oder einen Monitor handeln. Eine andere vorteilhafte Weiterbildung der Erfindung sieht jedoch vor, daß das Anzeigegerät ein Beamer ist, dessen Anzeigeeinrichtung durch eine Projektionsfläche gebildet ist, die zwischen einer Ruheposition und einer Betriebsposition bewegbar ist. Hierbei kann die Projektionsfläche eine im wesentlichen starre Projektionsfläche sein. Es ist jedoch auch möglich, daß die Projektionsfläche leinwandartig ausgebildet ist. Bei einer solchen Ausführungsform kann die Antriebseinheit beispielweise als Wickelvorrichtung zum Auf- bzw. Abwickeln der leinwandartigen Projektionsfläche ausgebildet sein.

Die Bewegung des Anzeigerätes zwischen der Anzeigeposition und der Ruheposition kann einer beliebigen geeigneten Kinematik folgen. Insoweit sieht eine vorteilhafte Weiterbildung der Erfindung vor, daß die Antriebseinheit als Hubeinheit zum Anheben bzw. Absenken des Anzeigegerätes bzw. seiner Anzeigeeinrichtung ausgebildet ist.

Die Erfindung wird nachfolgend anhand der beigefügten stark schematisierten Zeichnung näher erläutert, in der ein Ausführungsbeispiel einer erfindungsgemäßen Einrichtung dargestellt ist. Dabei bilden alle beschriebenen, in der Zeichnung dargestellten und in den Schutzansprüchen beanspruchten Merkmale für sich genommen sowie in beliebiger Kombination miteinander den Gegenstand der Erfindung, unabhängig von ihrer Zusammenfassung in den Schutzansprüchen und deren Rückbeziehung sowie unabhängig von ihrer Beschreibung bzw. Darstellung in der Zeichnung.

Es zeigt:
- Fig. 1: ein schematisches Blockschaltbild einer erfindungsgemäßen Einrichtung,
- Fig. 2: eine Perspektivansicht eines mittels der Einrichtung gemäß Fig. 1 bewegbaren Anzeigegerätes in seiner Ruheposition,
- Fig. 3: eine Seitenansicht des Anzeigegerätes gemäß Fig. 2,
- Fig. 4: in gleicher Darstellung wie Fig. 2 das Anzeigegerät gemäß Fig. 2 in seiner Anzeigeposition und
- Fig. 5: eine Seitenansicht des Anzeigegerätes gemäß Fig. 4.

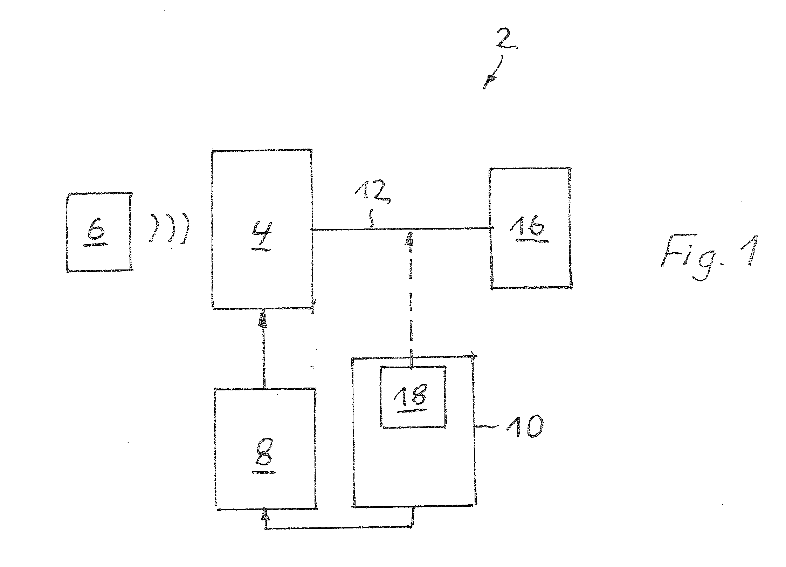

In Fig. 1 ist ein erstes Ausführungsbeispiel einer erfindungsgemäßen Einrichtung 2 zum Bewegen eines Anzeigegerätes 4, beispielsweise eines Fernsehgerätes, zwischen einer Anzeigeposition und einer Ruheposition dargestellt. Die Einrichtung 2 weist eine Fernbedienung 6 auf, mittels derer das Anzeigegerät 4, das nachfolgend auch kurz als Gerät bezeichnet wird, in herkömmlicher und allgemein bekannter Weise ansteuerbar ist. Die Einrichtung 2 weist ferner eine Antriebseinheit 8 auf zum Bewegen des Gerätes 4 zwischen der Anzeigeposition und der Ruheposition. Ferner weist die Einrichtung 2 eine Steuerungseinheit 10 zum Ansteuern der Antriebseinheit 8 auf.

Das Gerät 4 ist über eine Spannungsversorgungsleitung 12 mit einer Spannungsversorgungseinrichtung 16, beispielsweise einem Stromnetz, verbunden.

Erfindungsgemäß weist die Steuerungseinheit 10 Detektionsmittel zur Detektion des Betriebszustandes des Gerätes 4 auf, wobei die Detektionsmittel bei dem dargestellten Ausführungsmittel detektieren, ob sich das Gerät 4 im Standby-Modus oder im vollständig eingeschalteten Zustand befindet. Erfindungsgemäß steuert die Steuerungseinheit 10 die Antriebseinheit 8 in Abhängigkeit von Ausgangssignalen der Detektionsmittel derart an, daß die Antriebseinheit 8 beim Einschalten des Geräts 4 dasselbe in die Anzeigeposition und beim Ausschalten des Gerätes 4 dasselbe in die Ruheposition bewegt.

Bei dem dargestellten Ausführungsbeispiel weisen die Detektionsmittel einen Stromsensor 18 auf, der derart mit der Spannungsversorgung des Gerätes 4 in Detektionsverbindung steht, daß der Stromsensor beim Einschalten des Gerätes 4 mittels der Fernbedienung 6 einen Anstieg der Stromaufnahme des Gerätes 4 und beim Abschalten des Gerätes 4 mittels der Fernbedienung 6 einen Abfall der Stromaufnahme detektiert. Hierzu fühlt der Stromsensor 18 den in der Spannungsversorgungsleitung 12 fließenden Strom ab.

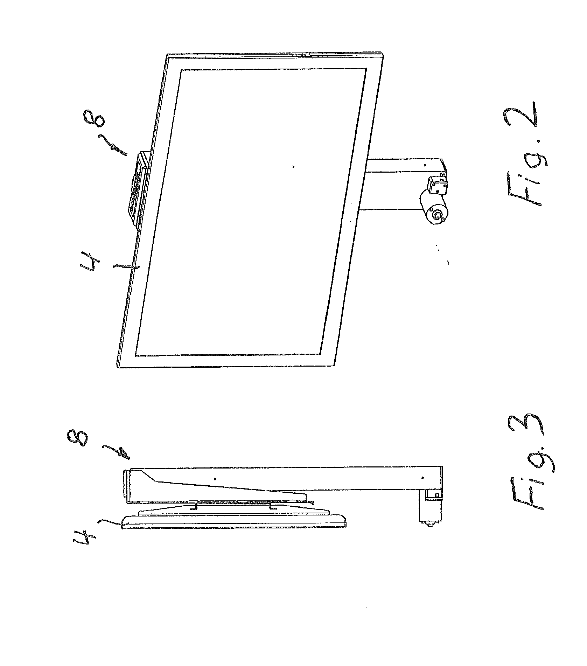

Fig. 2 zeigt eine Perspektivdarstellung des Gerätes 4 in seiner Ruheposition. Bei dem dargestellten Ausführungsbeispiel ist die Antriebseinheit als Hubeinheit zum Anheben bzw. Absenken des Gerätes 4 ausgebildet und weist eine elektromotorisch betriebene Teleskop-Hubsäule auf. Aufbau und Funktionsweise einer entsprechenden Teleskop-Hubsäule sind dem Fachmann allgemein bekannt und werden daher hier nicht näher erläutert.

Fig. 3 zeigt das Gerät 4 gemäß Fig. 2 in einer Seitenansicht.

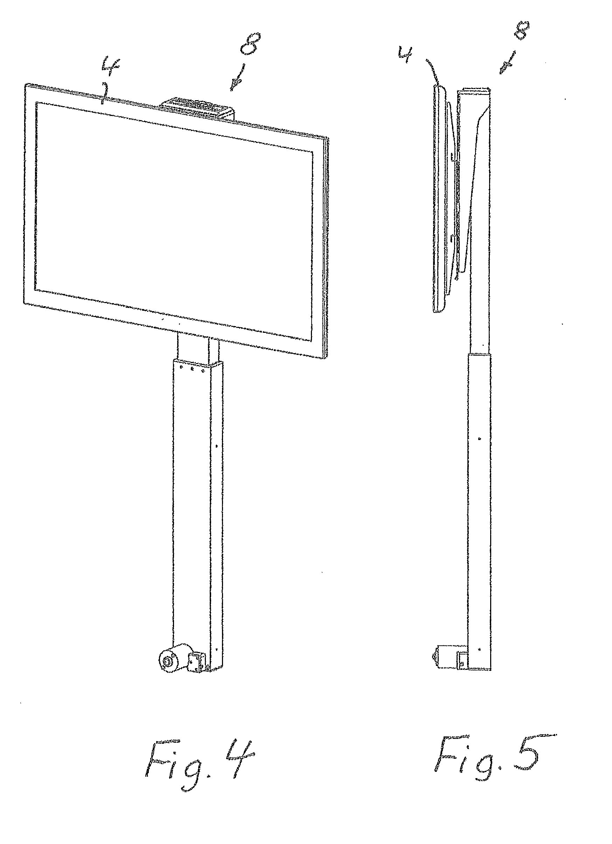

Fig. 4 zeigt das Gerät 4 in seiner Anzeigeposition, in der es mittels der Antriebseinheit 4 angehoben ist. In der Ruheposition kann das Gerät 4 beispielsweise in einem Möbel versenkt aufgenommen sein, während es in der Anzeigeposition aus dem Möbel ausgefahren ist.

Fig. 5 zeigt das Gerät 4 gemäß Fig. 4 in einer Seitenansicht.

Die Funktionsweise der erfindungsgemäßen Einrichtung 2 ist wie folgt.

Wird das Gerät 4 mittels der Fernbedienung 6 aus seinem Standby-Modus in den vollständig eingeschalteten Zustand geschaltet, so führt dies zu einem Anstieg der Stromaufnahme des Gerätes 4. Diesen Anstieg fühlt der Stromsensor 18 in der Versorgungsleitung 12 ab. In Abhängigkeit der zugehörigen Ausgangssignale des Stromsensors 18 steuert die Steuerungseinheit 10 die Antriebseinheit 8 so an, daß diese das Gerät 4 aus der in Fig. 2 dargestellten Ruheposition in die in Fig. 4 dargestellte Anzeigeposition bewegt.

Schaltet der Benutzer das Gerät 4 mittels der Fernbedienung 6 aus dem vollständig eingeschalteten Zustand in den Standby-Modus, so sinkt die Stromaufnahme des Gerätes 4. Dies wird von dem Stromsensor 18 detektiert. Demzufolge steuert die Steuerungseinheit 10 die Antriebseinheit 8 derart an, daß diese das Gerät 4 4 aus der in Fig. 4 dargestellten Anzeigeposition zurück in die in Fig. 2 dargestellte Ruheposition bewegt. Hierbei kann in der Steuerungseinheit 10 eine Schwellenwertentscheidung vorgenommen werden, derart, daß die jeweilige Bewegung nur dann ausgelöst wird, wenn die Stromaufnahme des Gerätes 4 einen vorbestimmten Wert erreicht (beim Einschalten) bzw. unterschreitet (beim Ausschalten). Auf diese Weise ist verhindert, daß eine Bewegung des Gerätes 4 bereits dann ausgelöst wird, wenn dasselbe mittels eines an dem Gerät 4 vorgesehenen Schalters aus einem vollständig ausgeschalteten Zustand in den Standby-Modus geschaltet wird.

Es ist jedoch auch möglich, die Bewegung des Gerätes 4 zwischen der Anzeigeposition und der Ruheposition auch oder nur dann auszulösen, wenn ein an dem Gerät 4 angeordneter Schalter, beispielsweise ein Ein/AusSchalter, betätigt wird.

## Patentansprüche

1. Einrichtung zum Bewegen eines Anzeigegerätes, beispielsweise eines Fernsehgerätes, oder einer Anzeigeeinrichtung des Anzeigegerätes zwischen einer Anzeigeposition und einer Ruheposition,
mit einer Fernbedienung zum Bedienen des Anzeigegerätes,
mit einer Antriebseinheit zum Bewegen des Anzeigegerätes bzw. seiner Anzeigeeinrichtung zwischen der Anzeigeposition und der Ruheposition und
mit einer Steuerungseinheit zum Ansteuern der Antriebseinheit,
**dadurch gekennzeichnet,**
**daß** die Steuerungseinheit (10) Detektionsmittel zur Detektion des Betriebszustandes des Anzeigegerätes (4) aufweist und
**daß** die Steuerungseinheit (10) die Antriebseinheit (8) in Abhängigkeit von Ausgangssignalen der Detektionsmittel derart ansteuert, daß die Antriebseinheit (8) beim Einschalten des Anzeigegerätes (4) dasselbe bzw.
dessen Anzeigeeinrichtung in die Anzeigeposition und beim Ausschalten des Anzeigegerätes (4) dasselbe bzw. dessen Anzeigeeinrichtung in die Ruheposition bewegt.

2. Einrichtung nach Anspruch 1, **dadurch gekennzeichnet, daß** die Steuerungseinheit (10) die Antriebseinheit (8) in Abhängigkeit von einer Betätigung der Fernbedienung ansteuert.

3. Einrichtung nach Anspruch 1, **dadurch gekennzeichnet, daß** die Detektionsmittel wenigstens einen Stromsensor (18) aufweisen, der derart mit der Spannungsversorgung (16) des Anzeigegerätes (4) in Detektionsverbindung steht, daß der Stromsensor (18) beim Einschalten des Anzeigegerätes (4) mittels der Fernbedienung (6) einen Anstieg der Stromaufnahme des Anzeigegerätes (4) und beim Abschalten des Anzeigegerätes (4) mittels der Fernbedienung (6) einen Abfall der Stromaufnahme delektiert.

4. Einrichtung nach Anspruch 1 oder 2, **dadurch gekennzeichnet, daß** das Anzeigegerät ein Beamer ist, dessen Anzeigeeinrichtung durch eine Projektionsfläche gebildet ist, die zwischen einer Ruheposition und einer Anzeigeposition bewegbar ist.

5. Einrichtung nach einem der Ansprüche 1 bis 3, **dadurch gekennzeichnet, daß** die Antriebseinheit (8) als Hubeinheit zum Anheben bzw. Absenken des Anzeigegerätes (4) bzw. seiner Anzeigeeinrichtung ausgebildet ist.
